# EUROPEAN PATENT APPLICATION

(11) **EP 4 439 333 A1**
(43) Date of publication of application: **02.10.2024**
(21) Application number: 23165985.5
(22) Date of filing: 31.03.2023
(51) Int. Cl.: G06F 16/36, G06F 16/335

(54) **AUTOMATIC DELETION OF OPC UA MODELS FROM RDF**

(71) Applicant: Siemens Aktiengesellschaft, 80333 München (DE)
(72) Inventor: The designation of the inventor has not yet been filed
(74) Representative: Siemens Patent Attorneys

(57) **Abstract**

Computer-implemented method for the efficient operation of a system with a first data storage (RDFS) comprising at least one first namespace (NS1) with at least one first set of data triples (T1, T2, T3, T4, T5, T6, T7, T8, T9, T10), wherein the operation of the system includes
a storage operation (SO) to register a second namespace (NS2) in the first data storage (RDFS),
a deletion operation (DO) to delete a third namespace (NS3) stored in the first data storage (RDFS) and
a query operation (QO) to query a namespace (NS) from the first data storage (RDFS).

## Description

*Independent of the grammatical term usage, individuals with male, female or other gender identities are included within the term.*

### Technical field

The invention relates to a computer-implemented method for the efficient operation of a system, a usage of the computer-implemented method for the efficient operation of a system, a system, a computer program product and a computer-implemented data structure for the usage within the computer-implemented method.

### Background

The common method of deleting a set of triples from a Resource Description Framework (RDF) store is to make use of SparQL queries. In this scenario, the system must create a custom SparQL query at runtime to delete a specific representation of an OPC UA information model. An approach that has a set of limitations:
The system requires extended SparQL knowledge to create correct and efficient queries to delete a specific OPC UA information model.

The system must know internal details about the current state of the RDF store, other existing OPC UA models, and their dependencies with the models of the namespace that is to be deleted.

Queries can become quite complex when considering a complete deletion of a model.

The deletion must be done at runtime, on resource-constrained devices, be scalable with the size of the RDF store and be performant, i.e., to allow deletion of a namespace correctly in under a second preferably.

As a result, to ease the usage of an edge application, an automatic deletion of OPC UA information models from an RDF store and therefore an approach that surpasses the limitations described above is provided by the invention.

### Summary

The objective of the invention is solved by a computer-implemented method for the efficient operation of a system with a first data storage comprising at least one first namespace with at least one first set of data triples, wherein the operation of the system includes a storage operation to register a second namespace in the first data storage,
a deletion operation to delete a third namespace stored in the first data storage and
a query operation to query a namespace from the first data storage,
wherein the following steps:
   a) at the storage operation, where the second namespace with a second set of data triples is provided:
      S1. determine at least one first intersection set with an intersection operation with the second set of data triples and the at least one first set of data triples,
      S2. determine and save references for the second namespace to the at least one first intersection set as at least one set of common data triples, including a reference to the second namespace, in a common triples tracking table in a second data storage further comprised by the system,
      S3. determine a difference set of data triples with a difference operation between the second set of data triples and the at least one set of common data triples,
      S4. save the difference set in the first data storage as set of distinct data triples,
      S5. determine at least one second intersection set of data triples with an intersection operation between the at least one first set of data triples and the at least one set of common data triples, and
      S6. determine and save references for the at least one first namespace to the at least one second intersection set as the at least one common set of data triples in the common triples tracking table, and
   b) at the deletion operation, where the third namespace with a third set of data triples or a reference to the third namespace is provided:
      D1. Look up from the common triples tracking table whether the third set of data triples or a reference to the third namespace equal references in the common triples tracking table,
      D2. if so:
         D2a. determine a second difference set of data triples with a difference operation between the third set of data triples and the at least one set of common data triples,
         D2b. Delete the second difference set of data triples from the first data store,
         D2c. Delete the references for the third namespace from the common triples tracking table,
         D2d. Delete from the common triples tracking table references to data triples that are referenced only once in the common triples tracking table or references to namespaces with no references to data triples.
      D3. If not: delete the third set of data triples from first data store,

The invention addresses the problem to revert a system change made during the registration of a namespace. The invention allows for an efficient and clean deletion of data triples which are not needed anymore after the deletion of the namespace and ensures that data triples, which are still needed by other namespaces, to remain at the RDF store.

In a further embodiment of the invention, the following steps are executed:
a) at the storage operation after step S6.:
   S7. Determine whether the common triples tracking table comprises duplicates of references to data triples, and if so, for the determined duplicates a duplicate reference is generated and a reference for the respective namespace is set to the duplicate reference, and
b) at the deletion operation before step D2:
   D1.5 Determine whether the common triples tracking table comprises at least one duplicate reference, and if so, replace the at least one duplicate reference by references to the data triples referenced by the duplicate reference.

This allows for the usage of a reduced number of references, therefore saving storage and computation resources.

In a further embodiment of the invention the at least one duplicate reference is stored at the common triples tracking table.

In a further embodiment of the invention
a) references to the first and/or second difference set of data triples are stored at a distinct triples tracking table as sets of distinct triples, including a reference to a namespace used in the storage and/or deletion operation, in a third data storage further comprised by the system and wherein the distinct triples are used as a result for the operation of step D2a, and
b) In step D2d, before the deletion of the references to the data triples: Save these references as sets of distinct data triples in the distinct triples tracking table.

By also storing the distinct triples further computation resources are saved.

The objective of the invention is also solved by the usage of the method for the efficient operation of a system with a processor and a first data storage, comprising further a technical device, which is controlled by the processor with data triples received from the first data storage, wherein a second and a third namespace are stored at the first data storage by executing the steps of the method.

The technical device can be for example a CNC machine, a robot or an assembly or manufacturing machine. By using the method to control the technical device, a correct and safe operation of the technical device is ensured even after the deletion of other namespaces.

The objective of the invention is also solved by a system with a processor and a first data storage, comprising further a technical device, wherein the system is configured to control the technical device with data triples of a fourth namespace received from the first data storage using a query operation,
wherein the system is configured to operate the first storage with
   a) a storage operation to register a second namespace in the first data storage, and
   b) a deletion operation to delete a third namespace stored in the first data storage, and
   c) the query operation to query a fourth namespace (NS4) from the first data storage (RDFS),
wherein the system is further configured for storing the second and third namespace by executing the method.

The objective of the invention is also solved by a computer program product comprising instructions which, when the program is executed by a computer, cause the computer to carry out the steps of the method.

The objective of the invention is also solved by a computer-implemented data structure for the usage as a common triples tracking table, comprising
a) References to namespaces and
b) References to common data triples of the respective namespaces.

In a further embodiment of the invention, the references within the data structure comprise references to duplicates.

The objective of the invention is also solved by a computer-implemented data structure for the usage as a distinct triples tracking table, comprising
a) References to namespaces and
b) References to distinct data triples of the respective namespaces.

### Brief description of the drawings

The invention is explained in more detail below with reference to an exemplary embodiment illustrated in the accompanying drawings. The drawings show:
Fig. 1 an embodiment of a schematic block diagram of the system according to the invention,
Fig. 2 an example of a tracking table according to the invention,
Fig. 3 an example of namespaces with distinct and common triples,
Fig. 4 an example of a corresponding tracking table to the example of Fig. 3,
Fig. 5 an extension of the tracking table of Fig. 4 corresponding to the example of Fig. 3,
Fig. 6 a visualization of namespaces with references to common and distinct triples,
Fig. 7-8 examples for tracking tables according to another embodiment the invention,
Fig. 9 an embodiment of a sequence diagram according to the invention,
Fig. 10 an embodiment of a flow chart according to the invention.

### Detailed description

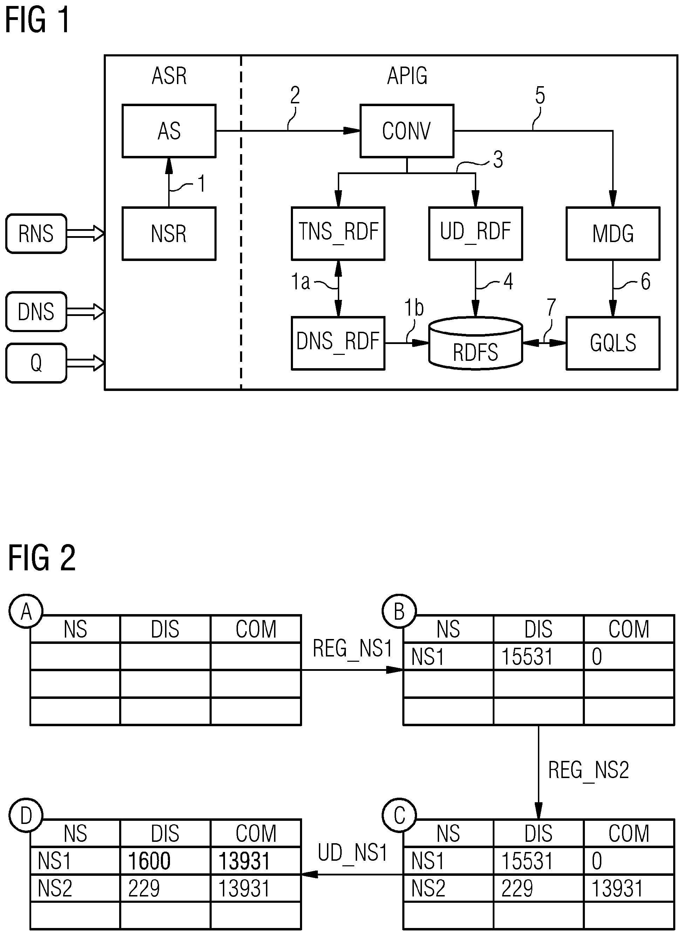

Fig. 1 shows an embodiment of a schematic block diagram of the system according to the invention.

The figure shows a block diagram of input commands, functions and components of the system including results 1-7.

The system includes a data storage RDFS for triples T. Triples T, also known as semantic triples or RDF triples, are the atomic data entity in the Resource Description Framework RDF data model.

The system is configured to perform storage operations to store new triples T at the request of a user or another system to register a namespace RNS.

The system is configured to perform deletion operations to delete triples T stored in the data storage RDFS at the request of a user or another system to delete a namespace DNS. The system is configured to perform query operations to query triples T from the data storage at the request of a user or another system for a GraphQL query Q.

The storage operations are performed at an aggregation server registration ASR by a namespace registration NSR and a subsequent data aggregation at an aggregation server AS. After the execution of these functions, the namespace NS registered is available in the internal aggregation server AS.

The function OPC to RDF conversion CONV converts the namespace OPC information model to a RDF representation, i.e. a set of triples T. During conversion the triples T required by a namespace NS are assigned to two sets, namely common triples COM and distinct triples DIS. The common triples COM represent the triples T that are common in the new namespace NS and at least one other existing namespace NS. Basically, these are the triples T that already exists in the RDF store RDFS, while the distinct triples DIS are the new triples T that are missing from the RDF store RDFS and must be added for the new namespace NS. The returned triples T, indicated as result 3 in Fig. 1, are used in the function update RDF UD_RDF, and in the function track namespace RDF triples TNS_RDF.

The function update RDF UD_RDF saves all triples T generated in the function OPC to RDF conversion CONV in the RDF store RDFS.

The function track namespace RDF triples TNS_RDF tracks the triples T required by the current registered namespace NS. Tracking the triples T of each namespace NS is an integral part of the deletion process because it provides information about which triples T are shared between all existing namespaces NS. The proposed method considers the common COM and the distinct triples DIS returned by the function OPC to RDF conversion CONV and the already existing triples T per namespace NS from the RDF store RDFS. To achieve this, the tracked triples T for each already existing namespace NS are updated and references to them are stored in a tracking table TT. The distinct triples DIS are the triples T that are deleted during execution of the function delete namespace from RDF DNS_RDF. The functions track namespace RDF triples TNS_RDF and delete namespace from RDF DNS_RDF both relate to an efficient way to delete data triples from the data storage RDFS.

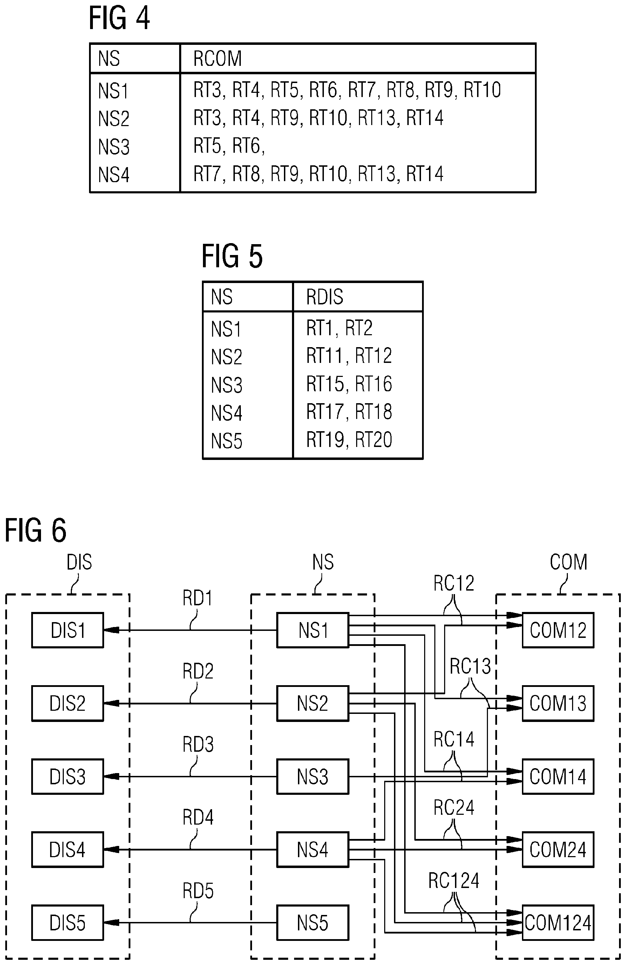

The function delete namespace from RDF DNS_RDF executes the deletion of a namespace NS by deleting its distinct triples DIS from the RDF store RDFS. The function is further explained in Fig. 4.

The two functions track namespace RDF triples TNS_RDF and delete namespace from RDF DNS_RDF allow a performant operation of the data storage RDFS according to the invention, which is based on an effective deletion of unused triples T within the data storage RDFS.

By the two functions track namespace RDF triples TNS_RDF and delete namespace from RDF DNS_RDF, the memory portion being deleted is released to a new usage within the system. Therefore, the memory can be used and sized in an efficient manner.

The GraphQL meta data generator MDG generates the inline GraphQL schema and the required types.

Fig. 2 shows an example of a tracking table TT, which in this example is a combination of a common triples tracking table TTC and a distinct triples tracking table TTD, according to the invention in various states A-D when a clean system receives the request to register a total of two namespaces NS1 and NS2.

The tracking table TT contains references to namespaces NS, references to distinct triples DIS and references to common triples COM. In the given example, in the beginning there is no namespace NS registered to the system and therefore no triples T, neither distinct triples DIS nor common triples COM, are stored in the RDF store RDFS. Therefore, in the state A of the tracking table TT there are no references to namespaces NS, distinct triples DIS or common triples COM indicated by an empty tracking table TT.

When a first namespace NS1 is registered to the system REG_NS1 at a user request to register a namespace RNS, the triples T are dived into distinct triples DIS and common triples COM by the function OPC to RDF conversion CONV. Since the namespace NS1 is the first namespace NS to be registered, all its triples T are distinct triples DIS. In this example, the namespace NS1 contains 15531 triples T. The distinct triples DIS are stored in the RDF store RDFS by the function update RDF UD_RDF and references to the namespace NS1 and its distinct triples DIS are stored in the tracking table TT by the function track namespace RDF triples TNS_RDF. No references to common triples COM for the namespace NS1 are stored in the tracking table TT. This is shown in state B of the tracking table TT.

When a second namespace NS2 is registered to the system REG_NS2 at a user request to register a namespace RNS, the triples T are again dived into distinct triples DIS and common triples COM by the function OPC to RDF conversion CONV. The function delivers the result, that the namespace NS2 has 229 distinct triples DIS and 13931 common triples COM with the namespace NS1. The distinct triples DIS are stored in the RDF store RDFS by the function update RDF UD_RDF. The common triples COM of the namespace NS2 need not be stored in the RDF store RDFS because they already exist, therefore saving resources. References to the namespace NS1, its distinct triples DIS and its common triples COM are stored in the tracking table TT by the function track namespace RDF triples TNS_RDF. This is shown in state C of the tracking table TT.

Since a new namespace NS2 was registered, all references to distinct triples DIS and common triples COM of the previously registered namespace NS1 need to be updated. In the given example, this update step UD_NS1 is carried out by the function track namespace RDF triples TNS_RDF. The function delivers the result, that the namespace NS1, after the registration of the namespace NS2, now only contains 600 distinct triples DIS but and 13931 common triples COM, shared with the namespace NS2. The function track namespace RDF triples TNS_RDF then updates the references of the namespace NS1 to the distinct triples DIS and the common triples COM in the tracking table TT. This is shown in state D of the tracking table TT.

Given the information contained in the tracking table TT, when a user request to delete a namespace DNS is received by the system, it is possible to determine which triples T can be safely deleted and which triples T are still needed by other namespaces NS.

To conclude, at the end of the registration process, besides the expected output of having namespaces NS registered in the internal aggregation server AS and a GraphQL API generated for it, there is also a detailed distribution of triples T between all existing namespaces NS contained in the tracking table TT. This information ensures proper deletion of any registered namespace NS.

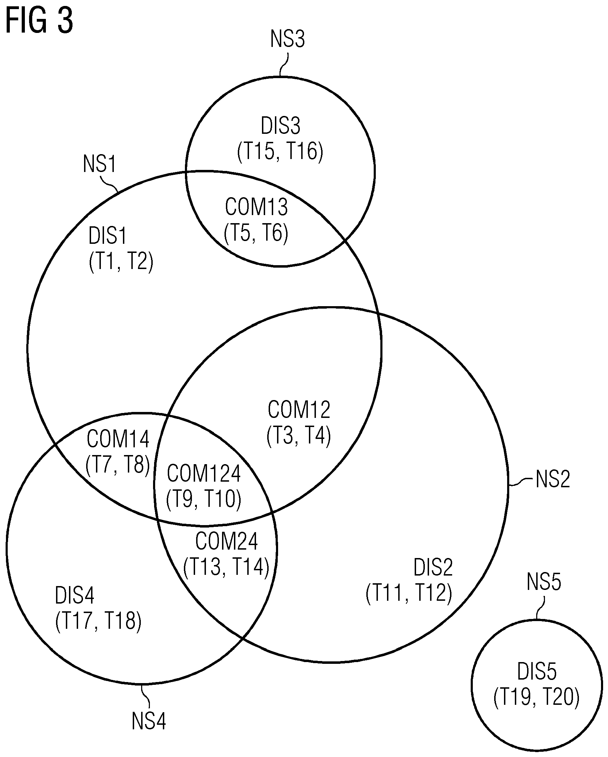

Fig. 3 shows an example of namespaces with distinct and common triples. In this example, there are five namespaces NS1-NS5.

Namespaces NS1-NS5 can be individual or can overlap in triples. This can be illustrated in separate, individual, i.e. distinct namespace DIS1-DIS5 for the respective namespace NS1-NS5. Further, overlaps in triples can be depicted by overlapping, i.e. common namespaces COM12, COM13, COM14, COM25, for instance by two overlapping namespaces NS1 and NS2, or namespaces NS1 and NS3, or namespaces NS1 and NS4, or namespaces NS2 and NS5. Additionally, multiple overlaps can be also considered by common namespace COM124, here by overlapping of namespaces NS1, NS2 and NS5.

The namespace NS1 has distinct triples DIS1, namely triples T1 and T2, common triples COM12 with the namespace NS2, namely triples T3 and T4, common triples COM13 with the namespace NS3, namely triples T5 and T6, common triples COM14 with the namespace NS4, namely T7 and T8, and common triples COM124 with the namespaces NS2 and NS4, namely T9 and T10.

The namespace NS2 has distinct triples DIS2, namely triples T11 and T12, common triples COM12 with the namespace NS1, namely triples T3 and T4, common triples COM24 with the namespace NS4, namely T13 and T14, and common triples COM124 with the namespaces NS1 and NS4, namely T9 and T10.

The namespace NS3 has distinct triples DIS3, namely triples T15 and T16 and common triples COM13 with the namespace NS1, namely triples T5 and T6, common triples COM13 with the namespace NS3, namely triples T5 and T6.

The namespace NS4 has distinct triples DIS4, namely triples T17 and T18, common triples COM14 with the namespace NS1, namely triples T7 and T8, common triples COM24 with the namespace NS2, namely T13 and T14, and common triples COM124 with the namespaces NS1 and NS4, namely T9 and T10.

The namespace NS5 only has distinct triples DIS5, namely triples T19 and T20.

Fig. 4 shows an example of a corresponding common triples tracking table TTC to the example of Fig. 3.

In the column labeled NS there are stored references to namespaces NS. In the column RCOM there are stored references to common triples COM.

In the common triples tracking table TTC are stored references RT3, RT4, RT5, RT6, RT7, RT8, RT9 and RT10 to the triples T3, T4, T5, T6, T7, T8, T9 and T10 respectively, which are common triples COM of the namespace NS1, including a reference to the namespace NS1 from these triples T.

In the common triples tracking table TTC further are stored references RT3, RT4, RT9, RT10, RT13 and RT14 to the triples T3, T4, T9, T10, T13 and T14 respectively, which are common triples COM of the namespace NS2, including a reference to the namespace NS2 from these triples T.

In the common triples tracking table TTC further are stored references RT5 and RT6 to the triples T5 and T6 respectively, which are common triples COM of the namespace NS3, including a reference to the namespace NS3 from these triples T.

In the common triples tracking table TTC further are stored references RT7, RT8, RT9, RT10, RT13 and RT14 to the triples RT7, RT8, RT9, RT10, RT13 and RT14 respectively, which are common triples COM of the namespace NS4, including a reference to the namespace NS4 from these triples T.

Fig. 5 shows a distinct triples tracking table TTD of Fig. 4 corresponding to the example of Fig. 3.

The distinct triples tracking table TTD contains references to the distinct triples DIS of the namespaces NS1-NS5. In the column labeled NS there are stored references to namespaces NS. In the column RDIS there are stored references to distinct triples DIS.

In the distinct triples tracking table TTD there are stored references RT1 and RT2 to the triples T1 and T2 respectively, which are distinct triples DIS of the namespace NS1, including a reference to the namespace NS1 from these triples T.

Further, in the distinct triples tracking table TTD there are stored references RT11 and RT12 to the triples T11 and T12 respectively, which are distinct triples DIS of the namespace NS2, including a reference to the namespace NS2 from these triples T.

Further, in the distinct triples tracking table TTD there are stored references RT15 and RT16 to the triples T15 and T16 respectively, which are distinct triples DIS of the namespace NS3, including a reference to the namespace NS3 from these triples T.

Further, in the distinct triples tracking table TTD there are stored references RT17 and RT18 to the triples T17 and T18 respectively, which are distinct triples DIS of the namespace NS4, including a reference to the namespace NS4 from these triples T.

Further, in the distinct triples tracking table TTD there are stored references RT19 and RT20 to the triples T19 and T20 respectively, which are distinct triples DIS of the namespace NS5, including a reference to the namespace NS5 from these triples T.

The references to the distinct triples DIS can be used for the efficient and accurate deletion of a given namespace NS.

Fig. 6 shows a visualization of references to common triples COM and distinct triples DIS from a given namespace NS according to the example of Fig. 3 according to another embodiment of the invention. In this embodiment, the references to the common triples COM are grouped, therefore reducing the amount of references needed to be stored in the common triples tracking table TTC.

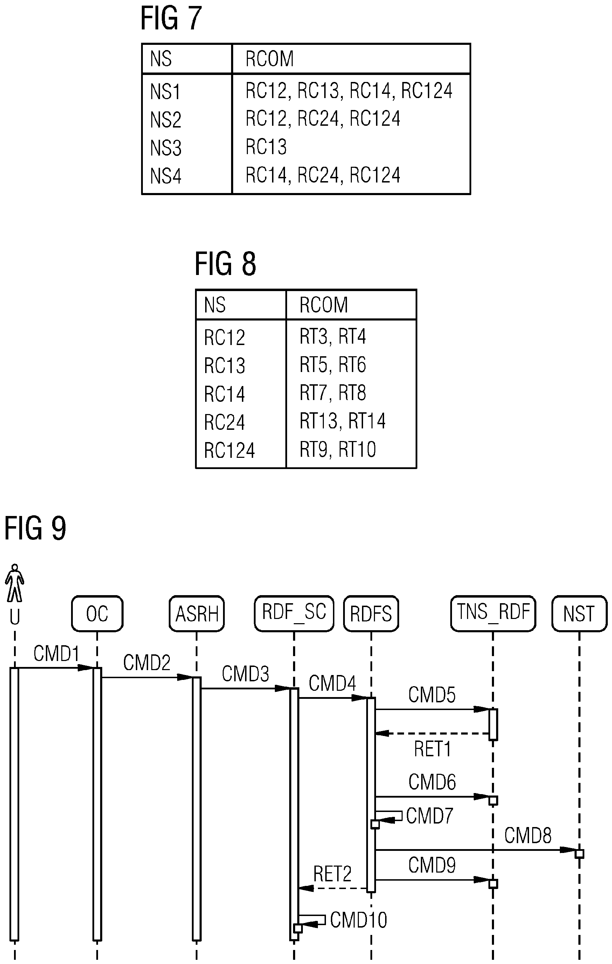

For example, the namespace NS1 references a group of common triples COM12 of the namespace NS1 with the namespace NS2 with a reference RC12. References to groups of common triples RC are stored in a common triples tracking table TTC according to Fig. 7 whereas the references to common triples COM from a group of references to common triples RC are stored in a common triples tracking table TTC according to Fig. 8.

Fig. 7 and Fig. 8 represent common triples tracking tables TTC according to the embodiment of the invention of Fig. 6. For example, since the namespace NS1 and the namespace NS2 both reference the triples T3 and T4 as common triples COM, a single reference RC12 to a group of references, in this case a group containing the references RT3 and RT4, can be stored in the common triples tracking table TTC.

Fig. 9 shows an embodiment of a sequence diagram according to the invention.

Sequences are shown between system elements, in particular an OPC UA Controller OC, an aggregating server request handler ASRH, a RDF stack controller RDF_SC, the RDF store RDFS, the function track namespace RDF triples TNS_RDF and namespace triples NST for system elements for their further usage and a user U providing input to the system.

Further, commands CMD1-CMD10 between said system elements are provided, wherein some of them deliver also returns RET1, RET2.

CMD1 describes a command set by the user U or another system towards the OPC UA controller OC to delete an instance of a namespace NS wherein the input is the Unified Resource Identifier (URI) of the namespace NS that is to be deleted. The command CMD1 to delete an instance of a namespace NS can also be set by another system.

CMD2 describes a command set by the OPC UA controller OC towards the aggregating server request handler ASRH to request a deletion of a namespace wherein the command contains the URI of the namespace NS.

CMD3 describes a command set by the aggregating server request handler ASRH towards the RDF stack controller RDF_SC to request the deletion of the namespace NS.

CMD4 describes a command set by the RDF stack controller RDF_SC towards the RDF store RDFS to request the deletion of a namespace NS.

CMD5 describes a command set by the RDF store RDFS towards the function track namespace RDF triples TNS_RDF to get namespace to delete tracked triples as an index.

A return function RET1 provides namespace triples T to delete from function track namespace RDF triples TNS_RDF to the RDF store RDFS.

CMD6 describes a command set by the RDF store RDFS towards the function track namespace RDF triples TNS_RDF to update triples T safe to delete on a namespace deletion, comprising namespaces NS to delete, namespace triples T to delete and common triples COM.

CMD7 describes a command set by the RDF store RDFS towards back to the RDF store RDFS to retract namespaces NS to delete with distinct triples DIS.

CMD8 describes an acknowledge command set by the RDF store RDFS as clean namespace triples T to a system entity NST to acknowledge clean triples T for the further usage.

CMD9 describes an acknowledge command set by the RDF store RDFS towards the function track namespace RDF triples TNS_RDF to acknowledge the deletion of namespaces NS.

A return function RET2 provides a deletion result from the RDF store RDFS to the RDF stack controller RDF_SC.

CMD10 describes an acknowledge command set by the RDF stack controller RDF_SC towards back to the RDF stack controller RDF_SC to acknowledge live nodes being indexed.

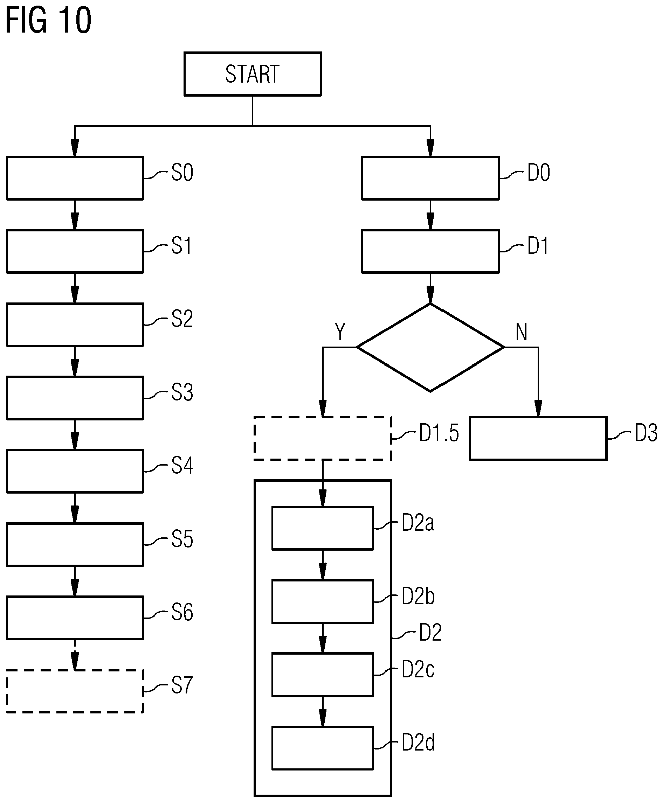

Fig. 10 shows an embodiment of a flow chart according to the invention.

A further embodiment of the method of the invention, which is compatible with the proposed method, is described without a depicting figure in the following. One or more steps of this further embodiment can be included optionally in the embodiment described before in the previous figures.
1. A user or another system provides the namespace URI that is to be deleted,
2. Use the namespace URI and fetch the common triples COM and distinct triples DIS that are tracked in the common triples tracking table TTC and the distinct triples tracking table TTD - these were added during registration of that namespace NS,
3. Update all remaining tracked namespaces NS, i.e., the distinct triples DIS and common triples COM, considering the impact on the RDF store RDFS after the given namespace NS is deleted.
   a. Go over all existing namespaces NS in the common triples tracking table TTC and the distinct triples tracking table TTD. There are three scenarios.
   b. For all the namespaces NS registered before the namespace NS we deleted - these are all existing namespaces in the RDF store RDFS when the namespace NS that is to be deleted was registered. The latest namespace NS that was added is deleted.
      i. Take the common triples COM associated with namespace that is deleted, if any, and do the following
         1. Add these common triples COM to the distinct triples DIS of the registered namespace NS,
         2. Remove them from the common triples COM of the same registered namespace NS,
         3. Stop tracking for the current registered namespace NS any common triples COM that were shared with the namespace NS that was deleted,
   c. For all the namespaces NS registered after the namespace NS that is to be deleted - the namespace NS that is to be deleted existed in the RDF store RDFS before any of the remaining existing namespaces were added:
      i. If that registered namespace NS shared some common triples COM with the namespace NS to be deleted then:
         1. Add the shared common triples COM to the initial distinct triples DIS of the remaining namespace NS - the initial triple count, i.e., the one we get from the CONV OPC2RDF, is hereby modified,
         2. Remove the shared common triples COM from the initial common triples COM of the remaining namespace NS,
      ii. If not, then add the common triples COM to the distinct triples DIS of the current namespace NS set the common triples COM to 0,
4. After the initial updates above, i.e., step 4 a final update is carried out to reconsider the order of registration and the new common triples COM. Hence, the common triples tracking table TTC and the distinct triples tracking table TTD are redone following the same steps that are done during the registration of namespaces NS:
   a. First the common triples COM and distinct triples DIS are restored for all remaining namespaces NS to the initial state,
   b. Then, by a look up at the index, the first registered namespace NS is added to the common triples tracking table TTC and distinct triples tracking table TTD - these new tracking tables only contain the first registered namespace NS now,
   c. All other namespaces NS are added one by one to these tracking tables by applying the method from the registration process,
5. Finally, the distinct triples DIS are deleted from the RDF store RDFS.

### List of reference signs

- APIG: GraphQL API generation
- AS: Aggregation server
- ASR: Aggregation server registration
- ASRH: aggregating server request handler
- CMD1-CMD10: commands
- COM, COM12, COM 13, COM14, COM 124, COM25: common namespace RDF triples
- CONV: OPC to RDF conversion
- DIS, DIS1-DIS5: distinct namespace RDF triples
- DNS: Delete namespace
- DNS_RDF: delete namespace from RDF
- DO: deletion operation
- GQLS: GraphQL server
- MDG: GraphQL meta data generator
- NS, NS1, NS2, NS3: namespace
- NSR: Namespace registration
- NSTT: namespace triples tracker
- OC: OPC UA Controller
- Q: GraphQL query
- RCOM: References to common triples
- RDF_SC: RDF stack controller
- RDFS: RDF store
- RDIS: References to distinct triples
- REG_NS1, REG_NS2: register namespace
- RET1, RET2: returns
- RNS: register namespace
- RT: Reference to data triple
- SO: storage or registration operation
- T: triple, data triple
- TT: tracking table
- TTC: common triples tracking table
- TTD: distinct triples tracking table
- TNS_RDF: track namespace RDF triples
- U: User
- UD_NS1: update namespace
- UD_RDF: update RDF

## Claims

1. Computer-implemented method for the efficient operation of a system with a first data storage (RDFS) comprising at least one first namespace (NS1) with at least one first set of data triples (T1, T2, T3, T4, T5, T6, T7, T8, T9, T10), wherein the operation of the system includes
a storage operation (SO) to register a second namespace (NS2) in the first data storage (RDFS),
a deletion operation (DO) to delete a third namespace (NS3) stored in the first data storage (RDFS) and
a query operation (QO) to query a namespace (NS) from the first data storage (RDFS),
**characterized by** the following steps:
a) at the storage operation (SO), where the second namespace (NS2) with a second set of data triples (T3, T4, T9, T10, T11, T12, T13, T14) is provided:
S1. determine at least one first intersection set (T3, T4, T9, T10) with an intersection operation with the second set of data triples (T3, T4, T9, T10, T11, T12, T13, T14) and the at least one first set of data triples (T1, T2, T3, T4, T5, T6, T7, T8, T9, T10),
S2. determine and save references (RT3, RT4, RT9, RT10) for the second namespace (NS2) to the at least one first intersection set (T3, T4, T9, T10) as at least one set of common data triples (COM12), including a reference to the second namespace (NS2), in a common triples tracking table (TTC) in a second data storage (DS2) further comprised by the system,
S3. determine a difference set of data triples (T11, T12, T13, T14) with a difference operation between the second set of data triples (T3, T4, T9, T10, T11, T12, T13, T14) and the at least one set of common data triples (COM12),
S4. save the difference set (T11, T12, T13, T14) in the first data storage (RDFS) as set of distinct data triples (DIS2),
S5. determine at least one second intersection set of data triples (T3, T4, T9, T10) with an intersection operation between the at least one first set of data triples (T1, T2, T3, T4, T5, T6, T7, T8, T9, T10) and the at least one set of common data triples (COM12), and
S6. determine and save references (RT3, RT4, RT9, RT10) for the at least one first namespace (NS1) to the at least one second intersection set (T3, T4, T9, T10) as the at least one common set of data triples (COM12) in the common triples tracking table (TTC), and
b) at the deletion operation (DO), where the third namespace (NS3) with a third set of data triples (T5, T6, T15, T16) or a reference to the third namespace (NS3) is provided:
D1. Look up from the common triples tracking table (TTC) whether the third set of data triples (T5, T6, T15, T16) or a reference to the third namespace (NS3) equal references in the common triples tracking table (TTC),
D2. if so (Y) :
D2a. determine a second difference set of data triples (T15, T16) with a difference operation between the third set of data triples (T5, T6, T15, T16) and the at least one set of common data triples (COM13),
D2b. Delete the second difference set of data triples (T15, T16) from the first data store (RDFS), D2c. Delete the references for the third namespace (NS3) from the common triples tracking table (TTC),
D2d. Delete from the common triples tracking table (TTC) references to data triples (T) that are referenced only once in the common triples tracking table (TTC) or references to namespaces (NS) with no references to data triples (T).
D3. If not (N): delete the third set of data triples (T5, T6, T15, T16) from first data store (RDFS),

2. Method according to the preceding claim, wherein the method comprises further:
a) at the storage operation (SO) after step S6.:
S7. Determine whether the common triples tracking table (TTC) comprises duplicates of references (RT3, RT4, RT9, RT10) to data triples (T), and if so, for the determined duplicates a duplicate reference (RC12) is generated and a reference for the respective namespace (NS) is set to the duplicate reference (RC12), and
b) at the deletion operation (DO) before step D2:
D1.5 Determine whether the common triples tracking table (TTC) comprises at least one duplicate reference (RC12), and if so, replace the at least one duplicate reference (RC12) by references (RT3, RT4, RT9, RT10) to the data triples (T3, T4, T9, T10) referenced by the duplicate reference (RC12).

3. Method according to one of the preceding claims, wherein the at least one duplicate reference (RC12) is stored at the common triples tracking table (TTC).

4. Method according to one of the preceding claims, wherein
a) references to the first and/or second difference set of data triples (T) are stored at a distinct triples tracking table (TTD) as sets of distinct triples (DIS), including a reference to a namespace (NS) used in the storage (SO) and/or deletion operation (DO), in a third data storage (DS3) further comprised by the system and wherein the distinct triples (DIS) are used as a result for the operation of step D2a, and
b) In step D2d, before the deletion of the references to the data triples (T): Save these references as sets of distinct data triples (DIS) in the distinct triples tracking table (TTD).

5. Usage of the method according to one of the preceding claims for the efficient operation of a system with a processor and a first data storage (RDFS), comprising further a technical device (TD), which is controlled by the processor with data triples (T) received from the first data storage (RDFS), wherein a second (NS2) and a third namespace (NS3) are stored at the first data storage (RDFS) by executing the steps of the method.

6. System with a processor and a first data storage (RDFS), comprising further a technical device (TD), wherein the system is configured to control the technical device (TD) with data triples (T) of a fourth namespace (NS4) received from the first data storage (RDFS) using a query operation (QO),
wherein the system is configured to operate the first storage (RDFS) with
a) a storage operation (SO) to register a second namespace (NS2) in the first data storage (RDFS), and
b) a deletion operation (DO) to delete a third namespace (NS3) stored in the first data storage (RDFS), and
c) the query operation (QO) to query a fourth namespace (NS4) from the first data storage (RDFS),
**characterized in that** the system is further configured for storing the second (NS2) and third namespace (NS3) by executing the method according to at least one of the claims 1-4.

7. Computer program product comprising instructions which, when the program is executed by a computer, cause the computer to carry out the steps of the method of claims 1 to 4.

8. Computer-implemented data structure for the usage as a common triples tracking table (TTC) within claim 1, comprising
a) References to namespaces (NS) and
b) References to common data triples (COM) of the respective namespaces (NS).

9. Data structure of claim 8, wherein the references comprise references to duplicates.

10. Computer-implemented data structure for the usage as a distinct triples tracking table (TTD) within claim 4, comprising
a) References to namespaces (NS) and
b) References to distinct data triples (DIS) of the respective namespaces (NS).
